# EUROPEAN PATENT APPLICATION

(11) **EP 4 818 495 A1**
(43) Date of publication of application: **07.10.2026**
(21) Application number: 26169711.4
(22) Date of filing: 31.03.2026
(51) Int. Cl.: F02C 7/32, F02C 7/36

(54) **AIRCRAFT POWERPLANT GEARBOX WITH SELECTABLE POWER COUPLER**

(30) Priority: 31.03.2025 US 202519095911
(71) Applicant: RTX Corporation, Farmington, CT 06032 (US)
(72) Inventor: CLARK, Thomas E., Wells, 04090 (US); YAZICI, Murat, Glastonbury, 06033 (US)
(74) Representative: Dehns

(57) **Abstract**

An aircraft powerplant assembly (22) includes a gearbox housing (116), a power transfer shaft (166), a first gear system (146), a second gear system (158) and a power coupler (104). The second gear system is operationally independent of the first gear system. The power coupler is disposed within the interior of the gearbox housing. The power coupler is arranged with the power transfer shaft and is disposed between the first gear system and the second gear system. The power coupler is configurable in a first arrangement and a second arrangement. In the first arrangement, the power coupler operatively couples the first gear system to the power transfer shaft and operatively decouples the second gear system from the power transfer shaft. In the second arrangement, the power coupler operatively couples the second gear system to the power transfer shaft and operatively decouples the first gear system from the power transfer shaft.

## Description

### BACKGROUND OF THE INVENTION

### 1. Technical Field

This invention relates generally to an aircraft powerplant and, more particularly, to an accessory system for the aircraft powerplant.

### 2. Background Information

An aircraft powerplant such as a turbofan engine includes an accessory system. This accessory system may include various accessories such as fluid pumps, electric motors, electric generators, and the like coupled to an accessory gearbox. Various types and configurations of accessory systems are known in the art. While these known accessory systems have various benefits, there is still room in the art for improvement.

### SUMMARY OF THE INVENTION

According to an aspect of the present invention, an assembly is provided for an aircraft powerplant. This assembly includes a gearbox housing, a power transfer shaft, a first gear system, a second gear system and a power coupler. The power transfer shaft is arranged with the gearbox housing. The first gear system is disposed within an interior of the gearbox housing. The second gear system is disposed within the interior of the gearbox housing and is operationally independent of the first gear system. The power coupler is disposed within the interior of the gearbox housing. The power coupler is arranged with the power transfer shaft and is disposed between the first gear system and the second gear system. The power coupler is configurable in a first arrangement and a second arrangement. In the first arrangement, the power coupler operatively couples the first gear system to the power transfer shaft and operatively decouples the second gear system from the power transfer shaft. In the second arrangement, the power coupler operatively couples the second gear system to the power transfer shaft and operatively decouples the first gear system from the power transfer shaft.

According to another aspect of the present invention, another assembly is provided for an aircraft powerplant. This assembly includes a gearbox housing, a power transfer shaft, a first gear system, a second gear system and a power coupler. The power transfer shaft is arranged with the gearbox housing and is rotatable about a shaft axis. The first gear system is disposed within an interior of the gearbox housing. The first gear system includes a first system gear. The second gear system is disposed within the interior of the gearbox housing and is operationally independent of the first gear system. The second gear system includes a second system gear. The power coupler includes a first coupler gear, a second coupler gear, a first gear clutch member, a second gear clutch member and an intermediate clutch member. The first coupler gear is meshed with the first system gear. The second coupler gear is meshed with the second system gear. The first gear clutch member is rotatable with the first coupler gear. The second gear clutch member is rotatable with the second coupler gear. The intermediate clutch member is translatable along the shaft axis between a first position and a second position. In the first position, the intermediate clutch member axially engages the first gear clutch member, and the intermediate clutch member disengages and is axially spaced from the second gear clutch member. In the second position, the intermediate clutch member axially engages the second gear clutch member, and the intermediate clutch member disengages and is axially spaced from the first gear clutch member.

According to still another aspect of the present invention, another assembly is provided for an aircraft powerplant. This assembly includes a gearbox housing, a power transfer shaft, a first gear system, a second gear system, a power coupler and an electric machine. The power transfer shaft is arranged with the gearbox housing and is rotatable about a shaft axis. The first gear system is disposed within an interior of the gearbox housing. The second gear system is disposed within the interior of the gearbox housing and is operationally independent of the first gear system. The power coupler includes an actuatable clutch member configured to translate axially along the shaft axis between a first position and a second position. The power coupler is configured to operatively couple the power transfer shaft to the first gear system when the actuatable clutch member is in the first position. The power coupler is configured to operatively couple the power transfer shaft to the second gear system when the actuatable clutch member is in the second position. The electric machine is mounted to the gearbox housing. The electric machine includes an electric machine rotor operatively coupled to the power coupler through the power transfer shaft.

Optionally, and in accordance with any of the above, the power coupler may be disposed within the interior of the gearbox housing.

Optionally, and in accordance with any of the above, the assembly may also include an electric machine. This electric machine may include an electric machine rotor operatively coupled to the power coupler through the power transfer shaft.

Optionally, and in accordance with any of the above, the power coupler may be configured as or otherwise include a clutch.

Optionally, and in accordance with any of the above, the first gear system may include a first system gear. The power coupler may include a first coupler gear and an actuatable clutch member. The first coupler gear may be meshed with the first system gear. The actuatable clutch member may operatively couple the first coupler gear to the power transfer shaft when the power coupler is in the first arrangement. The actuatable clutch member may operatively decouple the first coupler gear from the power transfer shaft when the power coupler is in the second arrangement.

Optionally, and in accordance with any of the above, the first coupler gear may be meshed with the first system gear when the power coupler is in the first arrangement and the second arrangement.

Optionally, and in accordance with any of the above, the actuatable clutch member may circumscribe the power transfer shaft. The actuatable clutch member may be configured to translate axially along the power transfer shaft between the first arrangement and the second arrangement.

Optionally, and in accordance with any of the above, the power coupler may also include a first gear clutch member connected to the first coupler gear. The actuatable clutch member may axially engage the first gear clutch member when the power coupler is in the first arrangement. The actuatable clutch member may be disengaged and axially spaced from the first gear clutch member when the power coupler is in the second arrangement.

Optionally, and in accordance with any of the above, the second gear system may include a second system gear. The power coupler may also include a second coupler gear and a second gear clutch member connected to the second coupler gear. The second coupler gear may be meshed with the second system gear. The actuatable clutch member may axially engage the second gear clutch member when the power coupler is in the second arrangement. The actuatable clutch member may be disengaged and may be axially spaced from the second gear clutch member when the power coupler is in the first arrangement.

Optionally, and in accordance with any of the above, the second gear system may include a second system gear. The power coupler may include a second coupler gear meshed with the second system gear. The actuatable clutch member may operatively couple the second coupler gear to the power transfer shaft when the power coupler is in the second arrangement. The actuatable clutch member may operatively decouple the second coupler gear from the power transfers shaft when the power coupler is in the first arrangement.

Optionally, and in accordance with any of the above, the first system gear and the second system gear may be axially offset along a shaft axis of the power transfer shaft.

Optionally, and in accordance with any of the above, the actuatable clutch member may be disposed axially between the first coupler gear and the second coupler gear along a shaft axis of the power transfer shaft.

Optionally, and in accordance with any of the above, the second coupler gear may be meshed with the second system gear when the power coupler is in the first arrangement and the second arrangement.

Optionally, and in accordance with any of the above, the power coupler may be configured as a line replaceable unit that is removable from the gearbox housing without removal of at least one of the first gear system or the second gear system.

Optionally, and in accordance with any of the above, the assembly may also include an engine accessory mounted to the gearbox housing. The engine accessory may include an engine accessory rotor operatively coupled to the power coupler through the power transfer shaft.

Optionally, and in accordance with any of the above, the engine accessory may be configured as or otherwise include an electric machine.

Optionally, and in accordance with any of the above, the assembly may also include a first engine accessory and/or a second engine accessory. The first engine accessory may be mounted to the gearbox housing. The first engine accessory may include a first engine accessory rotor operatively coupled to the power coupler through the first gear system. The second engine accessory may be mounted to the gearbox housing. The second engine accessory may include a second engine accessory rotor operatively coupled to the power coupler through the second gear system.

Optionally, and in accordance with any of the above, the assembly may also include a turbine engine. The turbine engine may include a first rotating structure and a second rotating structure rotationally independent of the first rotating structure. The first rotating structure may include a first bladed rotor. The first rotating structure may be operatively coupled to the power coupler through the first gear system. The second rotating structure may include a second bladed rotor. The second rotating structure may be operatively coupled to the power coupler through the second gear system.

Optionally, and in accordance with any of the above, the assembly may also include an accessory gearbox. This accessory gearbox may include the gearbox housing, the power transfer shaft, the first gear system, the second gear system and the power coupler.

The present invention may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial schematic sectional illustration of an aircraft propulsion system.
FIG. 2 is a schematic illustration of a portion of the aircraft propulsion system with an accessory system.
FIGS. 3A and 3B are partial schematic illustrations of the accessory system with its power coupler in various arrangements.
FIGS. 4A and 4B are partial schematic illustrations of the accessory system with various power coupler access arrangements.
FIG. 5 is a schematic illustration of a portion of the aircraft propulsion system with an electric machine electrically coupled to an electrical system.

### DETAILED DESCRIPTION

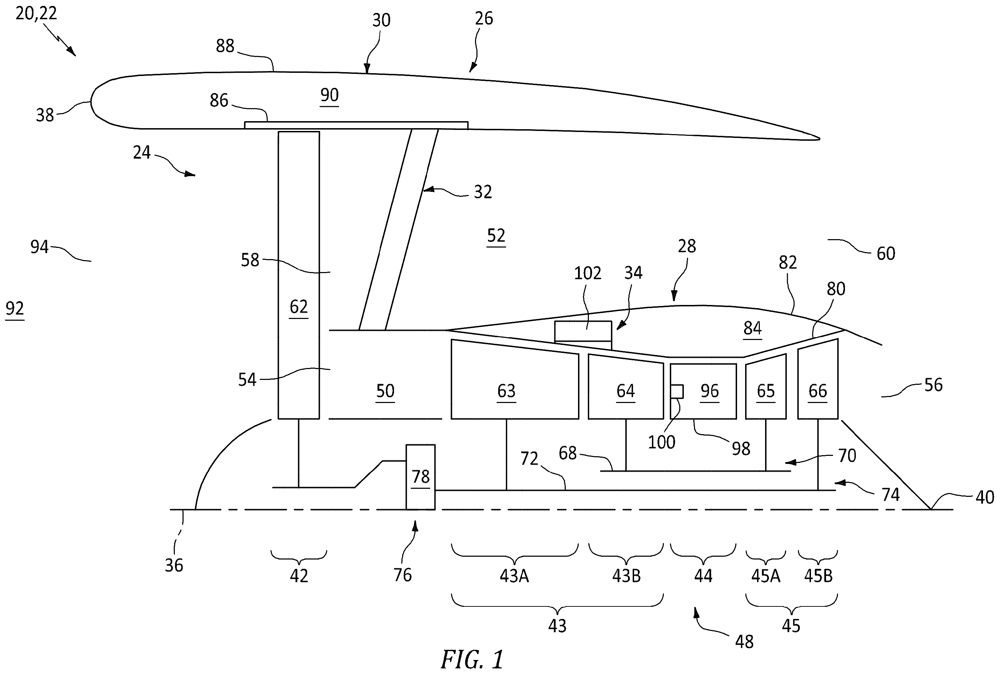

FIG. 1 illustrates a powerplant 20 for an aircraft. The aircraft may be an airplane, a drone (e.g., an unmanned aerial vehicle (UAV)) or any other manned or unmanned aerial vehicle or system. For ease of description, the aircraft powerplant 20 is described below as a propulsion system 22 for the aircraft and, more particularly, as a turbofan propulsion system. The aircraft powerplant 20 of the present invention, however, is not limited to such an exemplary propulsion system. The aircraft propulsion system 22, for example, may alternatively be configured as a turbojet propulsion system, a turboprop propulsion system, a turboshaft propulsion system, a propfan propulsion system, a pusher fan propulsion system, or any other type of ducted and/or open propulsor rotor propulsion system. Moreover, the aircraft powerplant 20 is not limited to propulsion system applications. The aircraft powerplant 20, for example, may also (or alternatively) be configured as an electrical power system for the aircraft; e.g., an auxiliary power unit (APU).

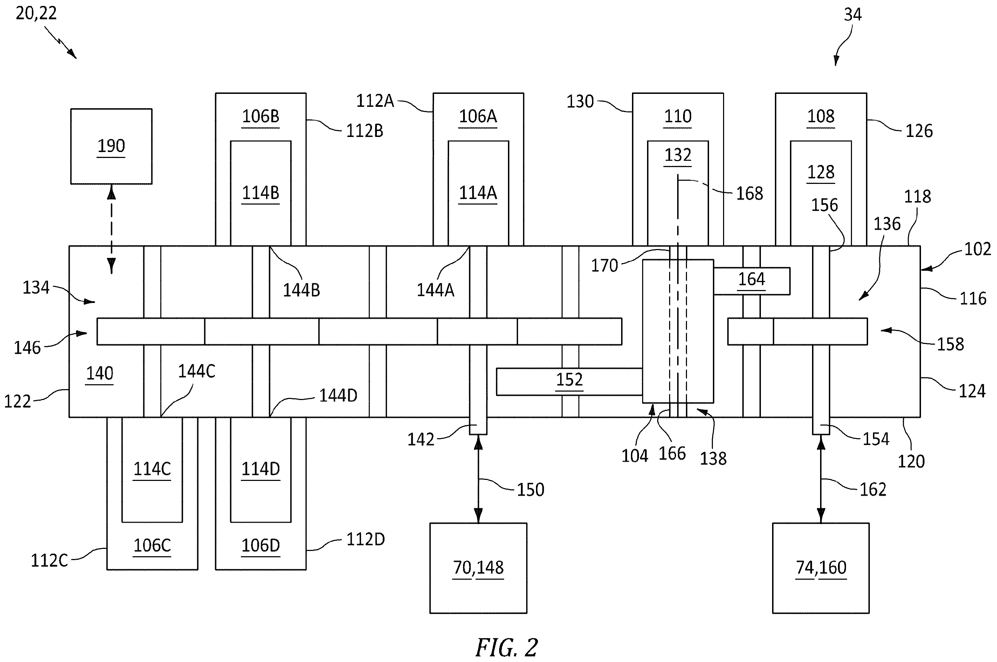

The aircraft propulsion system 22 includes a gas turbine engine 24 (e.g., a turbofan engine) housed within a stationary propulsion system housing 26, which propulsion system housing 26 of FIG. 1 includes an inner housing structure 28, an outer housing structure 30 and a guide vane structure 32 (e.g., a fan exit guide vane (FEGV) structure) extending radially between and connected to the inner housing structure 28 and the outer housing structure 30. The aircraft propulsion system 22 also includes an accessory system 34 (see also FIG. 2) servicing one or more components and/or sub-systems of the aircraft propulsion system 22 and its turbine engine 24. The aircraft propulsion system 22 extends axially along a powerplant axis 36 between an axial upstream, forward end 38 of the aircraft propulsion system 22 and an axial downstream, aft end 40 of the aircraft propulsion system 22. Briefly, the powerplant axis 36 may be a centerline axis of the aircraft propulsion system 22, the turbine engine 24 and/or one or more of its members. The powerplant axis 36 may also or alternatively be a rotational axis for one or more members of the turbine engine 24.

The aircraft propulsion system 22 and its turbine engine 24 of FIG. 1 include a propulsor section 42 (e.g., a fan section), a compressor section 43, a combustor section 44 and a turbine section 45. The compressor section 43 of FIG. 1 includes a low pressure compressor (LPC) section 43A and a high pressure compressor (HPC) section 43B. The turbine section 45 of FIG. 1 includes a high pressure turbine (HPT) section 45A and a low pressure turbine (LPT) section 45B. At least (or only) the LPC section 43A, the HPC section 43B, the combustor section 44, the HPT section 45A and the LPT section 45B collectively form a core 48 (e.g., a gas generator) of the turbine engine 24. The aircraft propulsion system 22 and its turbine engine 24 of FIG. 1 also include a core flowpath 50 (e.g., an annular core flowpath) and a bypass flowpath 52 (e.g., an annular bypass flowpath). The core flowpath 50 extends sequentially through the LPC section 43A, the HPC section 43B, the combustor section 44, the HPT section 45A and the LPT section 45B from an airflow inlet 54 into the core flowpath 50 to a combustion products exhaust 56 out from the core flowpath 50. The bypass flowpath 52 extends through a bypass duct from an airflow inlet 58 into the bypass flowpath 52 to an airflow exhaust 60 from the bypass flowpath 52, where the bypass duct may be formed by the inner housing structure 28 and the outer housing structure 30. The bypass flowpath 52 and its bypass duct are configured to bypass (e.g., are disposed radially outboard of and extend along) the engine core 48 and the inner housing structure 28.

The propulsor section 42, the LPC section 43A, the HPC section 43B, the combustor section 44, the HPT section 45A and the LPT section 45B may be arranged sequentially along the powerplant axis 36 within the housing structure 26. The propulsor section 42 includes a bladed propulsor rotor 62; e.g., a fan rotor. The LPC section 43A includes a bladed low pressure compressor (LPC) rotor 63. The HPC section 43B includes a bladed high pressure compressor (HPC) rotor 64. The HPT section 45A includes a bladed high pressure turbine (HPT) rotor 65. The LPT section 45B includes a bladed low pressure turbine (LPT) rotor 66. Each of these engine rotors 62-66 includes a rotor base (e.g., a disk or a hub) and a plurality of rotor blades (e.g., airfoils, vanes, etc.). The rotor blades may be arranged into one or more stages axially along the respective engine rotor 62-66. The rotor blades in each stage are arranged and may be equispaced circumferentially around the respective rotor base in an annular array. Each of the rotor blades is connected to the respective rotor base. The rotor blades, for example, may be formed integral with or otherwise attached to the respective rotor base. Each of the rotor blades projects spanwise (e.g., radially) out from the respective rotor base to a distal tip of the respective rotor blade.

The HPC rotor 64 is coupled to and rotatable with the HPT rotor 65. The HPC rotor 64 of FIG. 1, for example, is connected to the HPT rotor 65 through a high speed shaft 68. At least (or only) the HPC rotor 64, the HPT rotor 65 and the high speed shaft 68 collectively form a high speed rotating structure 70; e.g., a high speed spool of the turbine engine 24 and its engine core 48. This high speed rotating structure 70 of FIG. 1 and its members 64, 65 and 68 are rotatable about the powerplant axis 36. However, it is contemplated the high speed rotating structure 70 may alternatively be rotatable about another axis radially and/or angularly offset from the rotational axis of the propulsor rotor 62 and/or the centerline axis of the turbine engine 24.

The LPC rotor 63 is coupled to and rotatable with the LPT rotor 66. The LPC rotor 63 of FIG. 1, for example, is connected to the LPT rotor 66 through a low speed shaft 72. At least (or only) the LPC rotor 63, the LPT rotor 66 and the low speed shaft 72 collectively form a low speed rotating structure 74; e.g., a low speed spool of the turbine engine 24 and its engine core 48. This low speed rotating structure 74 of FIG. 1 and its members 63, 66 and 72 are rotatable about the powerplant axis 36. However, it is contemplated the low speed rotating structure 74 may alternatively be rotatable about another axis radially and/or angularly offset from the rotational axis of the propulsor rotor 62 and/or the centerline axis of the turbine engine 24.

The low speed rotating structure 74 is coupled to the propulsor rotor 62 through a rotating structure-to-propulsor (RSP) drivetrain 76. The RSP drivetrain 76 may be configured as a geared drivetrain, where a geartrain 78 (e.g., a transmission, a speed change device, an epicyclic geartrain, etc.) is disposed between and operatively couples the propulsor rotor 62 to the low speed rotating structure 74 and its LPT rotor 66. With this arrangement, the propulsor rotor 62 may rotate at a different (e.g., slower) rotational speed than the low speed rotating structure 74 and its LPT rotor 66. Here, the propulsor rotor 62 and the low speed rotating structure 74 may rotate in a common (the same) direction about the powerplant axis 36 or in opposite directions about the powerplant axis 36 depending, for example, upon the specific configuration of the geartrain 78. Alternatively, the RSP drivetrain 76 may be configured as a direct-drive drivetrain, where the geartrain 78 is omitted. With such an arrangement, the propulsor rotor 62 rotates at a common (the same) rotational speed as the low speed rotating structure 74 and its LPT rotor 66.

The inner housing structure 28 of FIG. 1 includes an inner case 80 (e.g., a core case) for the turbine engine 24, an inner nacelle structure 82 (sometimes referred to as an inner fixed structure (IFS)) and an internal inner housing compartment 84 (e.g., an engine core compartment). The inner case 80 is disposed radially outboard of, extends axially along and may circumscribe one or more or all of the engine sections 43A-45B and the engine rotors 63-66. The inner case 80 may thereby house and provide a support structure for the respective engine sections 43A-45B and the engine rotors 63-66. The inner nacelle structure 82 is configured to provide an aerodynamic cover over the engine core 48 and its inner case 80. The inner housing compartment 84 of FIG. 1 is formed by and is disposed radially between the inner case 80 and an inner barrel of the inner nacelle structure 82. The inner housing structure 28 and its inner nacelle structure 82 may also form a radial inner peripheral boundary of the bypass flowpath 52.

The outer housing structure 30 of FIG. 1 includes an outer case 86 (e.g., a fan case) for the turbine engine 24, an outer nacelle structure 88 and an internal outer housing compartment 90. The outer case 86 is disposed radially outboard of, extends axially along and may circumscribe the propulsor section 42 and its propulsor rotor 62. The outer case 86 may thereby house and may be configured as a containment structure for the propulsor section 42 and its propulsor rotor 62. The outer nacelle structure 88 is configured to provide an aerodynamic cover over the outer case 86. The outer housing compartment 90 of FIG. 1 is at least partially formed by and disposed radially between the outer case 86 and an outer portion (e.g., fan cowls) of the outer nacelle structure 88. The outer housing structure 30 and its outer nacelle structure 88 may also form a radial outer peripheral boundary of the bypass flowpath 52.

During operation of the aircraft propulsion system 22 of FIG. 1, ambient air from an environment 92 external to the aircraft and its aircraft propulsion system 22 enters the aircraft propulsion system 22 and its turbine engine 24 through an airflow inlet 94. This air is propelled by the rotating propulsor rotor 62 in a downstream, aft direction towards the propulsion system aft end 40.

An outer stream of the air propelled by the rotating propulsor rotor 62 is directed into the bypass flowpath 52 through its bypass inlet 58, which air entering the bypass flowpath 52 may be referred to as "bypass air". The guide vane structure 32 conditions (e.g., straightens out, de-swirls, etc.) the flow of the bypass air within the bypass duct. This conditioned bypass air is subsequently directed out of the aircraft propulsion system 22 through the bypass exhaust 60 to provide forward thrust. This propulsion of the bypass air may account for a majority of the forward thrust generated by the aircraft propulsion system 22 and its turbine engine 24 of FIG. 1.

An inner stream of the air propelled by the rotating propulsor rotor 62 is directed into the core flowpath 50 through its core inlet 54, which air entering the core flowpath 50 may be referred to as "core air". This core air is compressed by the LPC rotor 63 and the HPC rotor 64 and is directed into a combustion chamber 96 (e.g., annular combustion chamber) of a combustor 98 (e.g., annular combustor) in the combustor section 44. Fuel is injected into the combustion chamber 96 by one or more fuel injectors 100 and mixed with the compressed core air to provide a fuel-air mixture. This fuel-air mixture is ignited and combustion products thereof flow through and sequentially drive rotation of the HPT rotor 65 and the LPT rotor 66. The rotation of the HPT rotor 65 and the LPT rotor 66 respectively drive rotation of the HPC rotor 64 and the LPC rotor 63 and, thus, compression of the air received from the core inlet 54. The rotation of the LPT rotor 66 also drives rotation of the propulsor rotor 62 through the RSP drivetrain 76. The combustion products may then be exhausted from the turbine engine 24 and its engine core 48 through the core exhaust 56.

While the turbine engine 24 is described above with a particular two rotating structure arrangement (e.g., a two-spool architecture), the present invention is not limited thereto. For example, the LPC rotor 63 may be omitted to configure the LPT rotor 66 as a power turbine (PT) rotor for the propulsor rotor 62. The turbine engine 24 may also or alternatively include another rotating structure with a bladed compressor rotor in the compressor section 43 and a bladed turbine rotor in the turbine section 45; e.g., an intermediate speed spool for the engine core 48.

Referring to FIG. 2, the accessory system 34 includes a set of one or more gearbox mounted engine accessories, an accessory gearbox 102 with an integrated power coupler 104. The gearbox mounted engine accessories of FIG. 2 includes one or more first engine accessories 106A-D (generally referred to as "106"), a second engine accessory 108 and a third engine accessory 110. The present invention, however, is not limited to such an exemplary gearbox mounted engine accessory arrangement. For example, the accessory system 34 may be configured with multiple of the second engine accessories 198 and/or multiple of the third engine accessories 110. Moreover, it is contemplated the accessory system 34 may alternatively be configured without one, more or all of the first engine accessories 106 and/or without the second engine accessory 108.

Each of the first engine accessories 106A-D includes a first engine accessory housing 112A-D (generally referred to as "112") (e.g., a case) and a first engine accessory rotor 114A-D (generally referred to as "114") at least partially housed within the respective first engine accessory housing 112A-D. Each first engine accessory 106 is mounted to or otherwise arranged with the accessory gearbox 102. The first engine accessory housing 112 of each first engine accessory 106, for example, may be mechanically fastened and/or otherwise attached to a housing 116 (e.g., a case) of the accessory gearbox 102. Briefly, the gearbox housing 116 of FIG. 2 extends axially along the powerplant axis 36 (see FIG. 1) between opposing axial sides 118 and 120 of the accessory gearbox 102 and its gearbox housing 116. The gearbox housing 116 of FIG. 2 also extends laterally (e.g., circumferentially and/or tangentially) between opposing lateral ends 122 and 124 of the accessory gearbox 102 and its gearbox housing 116. The first engine accessories 106A and 106B may be disposed at (e.g., on, adjacent or proximate) the gearbox first side 118. The first engine accessories 106A and 106B of FIG. 2, for example, are arranged laterally along the gearbox first side 118 between the gearbox first end 122 and an intermediate location of the power coupler 104 and/or the third engine accessory 110. The first engine accessories 106C and 106D of may be disposed at the gearbox second side 120. The first engine accessories 106C and 106D of FIG. 2, for example, are arranged laterally along the gearbox second side 120 between the gearbox first end 122 and the intermediate location of the power coupler 104 and/or the third engine accessory 110. The present invention, however, is not limited to such an exemplary arrangement. All of the first engine accessories 106, for example, may be disposed to the gearbox first side 118 or the gearbox second side 120.

The second engine accessory 108 includes a second engine accessory housing 126 (e.g., a case) and a second engine accessory rotor 128 at least partially housed within the second engine accessory housing 126. The second engine accessory 108 is mounted to or otherwise arranged with the accessory gearbox 102. The second engine accessory housing 126, for example, may be mechanically fastened and/or otherwise attached to the gearbox housing 116. The second engine accessory 108 may be disposed at the gearbox first side 118. The second engine accessory 108 of FIG. 2, for example, is arranged laterally along the gearbox first side 118 between the gearbox second end 124 and the intermediate location of the power coupler 104 and/or the third engine accessory 110. The present invention, however, is not limited to such an exemplary arrangement. For example, the second engine accessory 108 may alternatively be arranged laterally along the gearbox second side 120 between the gearbox second end 124 and the intermediate location of the power coupler 104 and/or the third engine accessory 110.

The third engine accessory 110 includes a third engine accessory housing 130 (e.g., a case) and a third engine accessory rotor 132 at least partially housed within the third engine accessory housing 130. The third engine accessory 110 is mounted to or otherwise arranged with the accessory gearbox 102. The third engine accessory housing 130, for example, may be mechanically fastened and/or otherwise attached to the gearbox housing 116. The third engine accessory 110 may be disposed at the gearbox first side 118. The third engine accessory 110 of FIG. 2, for example, is arranged laterally along the gearbox first side 118 between (a) the first engine accessories 106A and 106B and (b) the second engine accessory 108. Here, the third engine accessory 110 is laterally aligned with the power coupler 104.

Examples of the engine accessories 106, 108 and 110 include, but are not limited to, fluid pump(s), fluid conditioner(s) and/or electric machine(s). Examples of the fluid pumps include, but are not limited to, fuel pump(s), hydraulic pump(s) and/or lubricant pump(s). Examples of the fluid conditioners include, but are not limited to, de-oiler(s) and/or separator(s). Examples of the electric machines include, but are not limited to, variable frequency generator(s), integral drive generator(s), permanent magnet motor-generator(s) and/or permanent magnet motor(s).

The accessory gearbox 102 includes the gearbox housing 116, a first engine power transfer apparatus 134, a second engine power transfer apparatus 136 and an accessory power transfer apparatus 138. Each of the power transfer apparatuses 134, 136, 138 is partially or completely housed within the gearbox housing 116. The power transfer apparatuses 134, 136 and 138 of FIG. 2, for example, are partially or completely located within a common (e.g., the same) internal gearbox compartment 140 of the gearbox housing 116.

The first engine power transfer apparatus 134 is operatively independent of the second engine power transfer apparatus 136 inside and outside of the accessory gearbox 102 and its gearbox housing 116. The first engine power transfer apparatus 134 of FIG. 2, for example, is spatially separated from and mechanically decoupled from the second engine power transfer apparatus 136 within the accessory gearbox 102 and its gearbox housing 116. By contrast, the first engine power transfer apparatus 134 of FIG. 2 may be selectively operatively coupled to the accessory power transfer apparatus 138 within the accessory gearbox 102 and its gearbox housing 116 through the power coupler 104 as described below.

The first engine power transfer apparatus 134 of FIG. 2 includes a first engine coupling 142, one or more first engine accessory couplings 144A-D (generally referred to as "144") and a first gear system 146. The first engine coupling 142 is operatively coupled to a first engine rotating structure 148 through, for example, a first drivetrain 150. This first drivetrain 150 may be configured as or otherwise include a shaft, a tower shaft assembly, another gearbox (e.g., an angle gearbox), and/or the like. For ease of description, the first engine rotating structure 148 may be described below as the high speed rotating structure 70. However, in other embodiments, it is contemplated the first engine rotating structure 148 may alternatively be the low speed rotating structure 74 or another rotating structure within the turbine engine 24 and its engine core 48 (see FIG. 1). Each first engine accessory coupling 144 of FIG. 2 is operatively coupled to the first engine accessory rotor 114 of a respective one of the first engine accessories 106. The first gear system 146 is (e.g., completely) housed within the accessory gearbox 102 and its gearbox housing 116. This first gear system 146 is operatively coupled between and operatively interconnects the various couplings 142 and 144. The first gear system 146 of FIG. 2 also includes a first system gear 152 engaged with the power coupler 104.

The second engine power transfer apparatus 136 is operatively independent of the first engine power transfer apparatus 134 inside and outside of the accessory gearbox 102 and its gearbox housing 116. The second engine power transfer apparatus 136 of FIG. 2, for example, is spatially separated from and mechanically decoupled from the first engine power transfer apparatus 134 within the accessory gearbox 102 and its gearbox housing 116. By contrast, the second engine power transfer apparatus 136 of FIG. 2 may be selectively operatively coupled to the accessory power transfer apparatus 138 within the accessory gearbox 102 and its gearbox housing 116 through the power coupler 104 as described below.

The second engine power transfer apparatus 136 of FIG. 2 includes a second engine coupling 154, a second engine accessory coupling 156 and a second gear system 158. The second engine coupling 154 is operatively coupled to a second engine rotating structure 160 through, for example, a second drivetrain 162. This second drivetrain 162 may be configured as or otherwise include a shaft, a tower shaft assembly, another gearbox (e.g., an angle gearbox), and/or the like. For ease of description, the second engine rotating structure 160 may be described below as the low speed rotating structure 74. However, in other embodiments, it is contemplated the second engine rotating structure 160 may alternatively be the high speed rotating structure 70 or another rotating structure within the turbine engine 24 and its engine core 48 (see FIG. 1). The second engine accessory coupling 156 of FIG. 2 is operatively coupled to the second engine accessory rotor 128. The second gear system 158 is (e.g., completely) housed within the accessory gearbox 102 and its gearbox housing 116. This second gear system 158 is operatively coupled between and operatively interconnects the various couplings 154 and 156. The second gear system 158 of FIG. 2 also includes a second system gear 164 engaged with the power coupler 104.

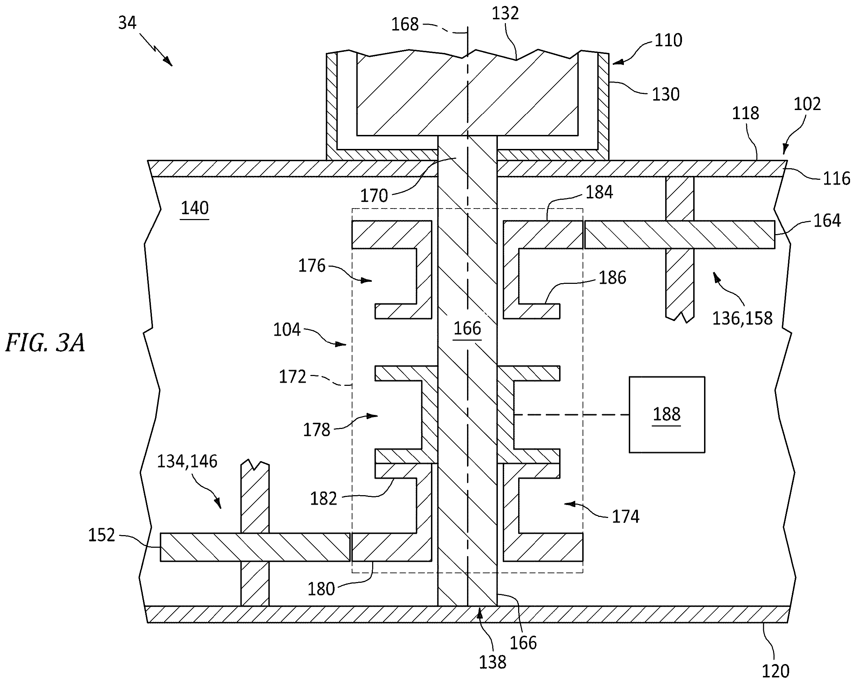

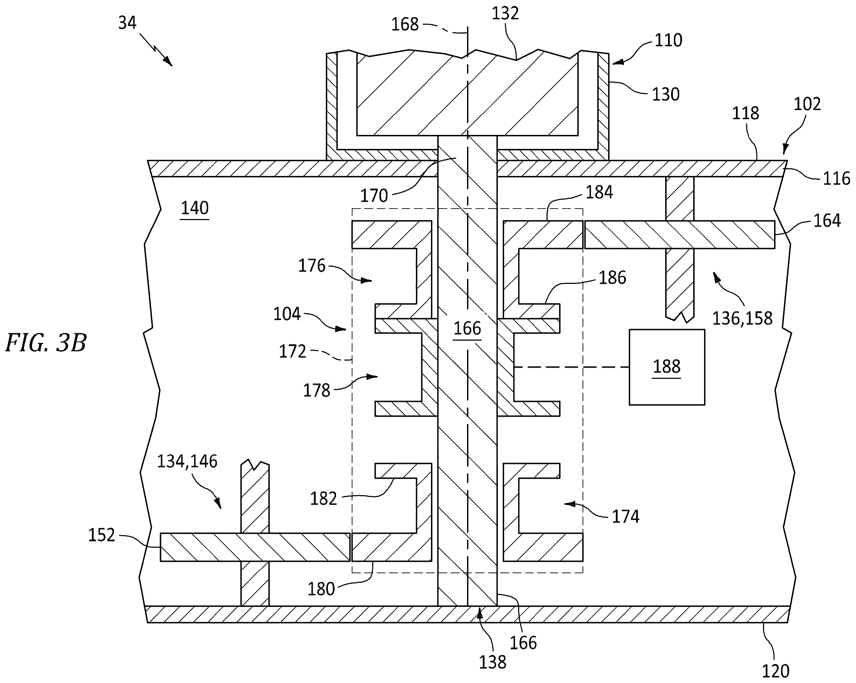

Referring to FIGS. 3A and 3B, the accessory power transfer apparatus 138 may be configured as or otherwise include a power transfer shaft 166. This power transfer shaft 166 is rotatable about an axis 168 of the power transfer shaft 166. The power transfer shaft 166 extends axially along its shaft axis 168 from a first end of the power transfer shaft 166 to an opposite second end of the power transfer shaft 166. The power transfer shaft 166 is operatively coupled to the third engine accessory rotor 132 through an accessory power transfer coupling 170. This accessory power transfer coupling 170 may be a mechanical connection (e.g., a bolted connection, a splined connection) between the power transfer shaft 166 and the third engine accessory rotor 132. The present invention, however, is not limited to such exemplary accessory power transfer coupling arrangements.

The power coupler 104 is partially or completely housed within the gearbox housing 116. The power coupler 104 of FIGS. 3A and 3B, for example, is partially or completely located within the internal gearbox compartment 140 of the gearbox housing 116. The power coupler 104 of FIGS. 3A and 3B includes a coupler housing 172 (e.g., a case), a first coupler assembly 174, a second coupler assembly 176 and an actuatable clutch member 178.

The first coupler assembly 174 is disposed within an interior of the coupler housing 172. This first coupler assembly 174 of FIGS. 3A and 3B includes a first coupler gear 180 and a first gear clutch member 182. Each of these first coupler assembly members 180, 182 is coaxial with and may axially overlap and circumscribe the power transfer shaft 166. However, each of the first coupler assembly members 180, 182 is rotationally independent of the power transfer shaft 166 when the actuatable clutch member 178 is disengaged from the first gear clutch member 182 (see FIG. 3B). The first coupler gear 180 may have an axially fixed position along the power transfer shaft 166 and its shaft axis 168. This first coupler gear 180 is engaged (e.g., meshed) and rotatable with the first system gear 152. Here, an interface between the first coupler gear 180 and the first system gear 152 may be disposed in (or near) a corresponding port (e.g., an opening) in a sidewall of the coupler housing 172. The first gear clutch member 182 is disposed axially along the power transfer shaft 166 and its shaft axis 168 between the first coupler gear 180 and the actuatable clutch member 178. The first gear clutch member 182 may have an axially fixed position along the power transfer shaft 166 and its shaft axis 168. This first gear clutch member 182 is connected to (e.g., for integral with or otherwise attached to) the first coupler gear 180. The first gear clutch member 182 is thereby rotatable with the first coupler gear 180 about the shaft axis 168.

The second coupler assembly 176 is disposed within the interior of the coupler housing 172. This second coupler assembly 176 of FIGS. 3A and 3B includes a second coupler gear 184 and a second gear clutch member 186. Each of these second coupler assembly members 184, 186 is coaxial with and may axially overlap and circumscribe the power transfer shaft 166. However, each of the second coupler assembly members 184, 186 is rotationally independent of the power transfer shaft 166 when the actuatable clutch member 178 is disengaged from the second gear clutch member 186 (see FIG. 3A). The second coupler gear 184 may have an axially fixed position along the power transfer shaft 166 and its shaft axis 168. This second coupler gear 184 is engaged (e.g., meshed) and rotatable with the second system gear 164. Here, an interface between the second coupler gear 184 and the second system gear 164 may be disposed in (or near) a corresponding port (e.g., an opening) in the sidewall of the coupler housing 172. The second gear clutch member 186 is disposed axially along the power transfer shaft 166 and its shaft axis 168 between the second coupler gear 184 and the actuatable clutch member 178. The second gear clutch member 186 may have an axially fixed position along the power transfer shaft 166 and its shaft axis 168. This second gear clutch member 186 is connected to (e.g., for integral with or otherwise attached to) the second coupler gear 184. The second gear clutch member 186 is thereby rotatable with the second coupler gear 184 about the shaft axis 168.

The actuatable clutch member 178 is disposed within the interior of the coupler housing 172. This actuatable clutch member 178 of FIGS. 3A and 3B is located axially along the power transfer shaft 166 and its shaft axis 168 between (a) the first coupler assembly 174 and its first gear clutch member 182 and (b) the second coupler assembly 176 and its second gear clutch member 186. The actuatable clutch member 178 is coaxial with, axially overlaps and circumscribes the power transfer shaft 166. The actuatable clutch member 178 is also operatively coupled to the power transfer shaft 166. The actuatable clutch member 178, for example, may be rotationally coupled to the power transfer shaft 166 through a splined and/or otherwise keyed interface between the actuatable clutch member 178 and the power transfer shaft 166. However, the actuatable clutch member 178 of FIGS. 3A and 3B is movably (e.g., translatable) axially along the power transfer shaft 166 between a first position (e.g., see FIG. 3A) and a second position (e.g., see FIG. 3B). A power coupler actuator 188 may thereby move the actuatable clutch member 178 axially between the first position of FIG. 3A and the second position of FIG. 3B. Examples of the coupler actuator 188 include, but are not limited to, a hydraulic actuator (e.g., a hydraulic cylinder), a pneumatic actuator, a fueldraulic actuator or an electric motor.

In the first position of FIG. 3A, the power coupler 104 is configured in a first power transfer arrangement. More particularly, the actuatable clutch member 178 operatively couples the first coupler assembly 174 to the power transfer shaft 166. The actuatable clutch member 178 of FIG. 3A, for example, axially engages (e.g., contacts and is pressed against by the coupler actuator 188) the first gear clutch member 182. The actuatable clutch member 178 may thereby rotationally link the power transfer shaft 166 to the first gear clutch member 182 and, thus, the first coupler gear 180. With this first power transfer arrangement, the power coupler 104 operatively couples the first gear system 146 to the power transfer shaft 166 and, thus, the third engine accessory rotor 132. By contrast, the actuatable clutch member 178 operatively decouples the second coupler assembly 176 from the power transfer shaft 166. The actuatable clutch member 178 of FIG. 3A, for example, is disengaged from and axially spaced from the second gear clutch member 186. The second gear clutch member 186 may thereby rotate with the second gear system 158 independent of the power transfer shaft 166.

With the first power transfer arrangement, the third engine accessory rotor 132 is operatively coupled to the first engine power transfer apparatus 134. The first engine power transfer apparatus elements 142 and 144 (see FIG. 2) may thereby rotate with the third engine accessory rotor 132. The third engine accessory rotor 132 may be rotationally driven by the first engine rotating structure 148 or the rotor of one of the first engine accessories 106 (see FIG. 2). Alternatively, the third engine accessory rotor 132 may drive rotation of (or mechanically boost power to) the first engine rotating structure 148 and/or the rotors 114 of the first engine accessories 106 (see FIG. 2).

In the second position of FIG. 3B, the power coupler 104 is configured in a second power transfer arrangement. More particularly, the actuatable clutch member 178 operatively couples the second coupler assembly 176 to the power transfer shaft 166. The actuatable clutch member 178 of FIG. 3B, for example, axially engages (e.g., contacts and is pressed against by the coupler actuator 188) the second gear clutch member 186. The actuatable clutch member 178 may thereby rotationally link the power transfer shaft 166 to the second gear clutch member 186 and, thus, the second coupler gear 184. With this second power transfer arrangement, the power coupler 104 operatively couples the second gear system 158 to the power transfer shaft 166 and, thus, the third engine accessory rotor 132. By contrast, the actuatable clutch member 178 operatively decouples the first coupler assembly 174 from the power transfer shaft 166. The actuatable clutch member 178 of FIG. 3B, for example, is disengaged from and axially spaced from the first gear clutch member 182. The first gear clutch member 182 may thereby rotate with the first gear system 146 independent of the power transfer shaft 166.

With the second power transfer arrangement, the third engine accessory rotor 132 is operatively coupled to the second engine power transfer apparatus 136. The second engine power transfer apparatus elements 154 and 156 (see FIG. 2) may thereby rotate with the third engine accessory rotor 132. The third engine accessory rotor 132 may be rotationally driven by the second engine rotating structure 160 or the second engine accessory rotor 128 (see FIG. 2). Alternatively, the third engine accessory rotor 132 may drive rotation of (or mechanically boost power to) the second engine rotating structure 160 and/or the second engine accessory rotor 128 (see FIG. 2).

While the power coupler 104 is described above with respect to the exemplary first and second power transfer arrangements, it is contemplated the actuatable clutch member 178 may also be moved (e.g., translated) by the coupler actuator 188 to an intermediate third position between the first position of FIG. 3A and the second position of FIG. 3B. At such a third position, the power coupler 104 may be configured in a neutral arrangement where the power coupler 104 operatively decouples the power transfer shaft 166 from both the first coupler assembly 174 and the second coupler assembly 176. In such a neutral position, the third engine accessory 110 may be depowered or operated independent of the first engine rotating structure 148 and the second engine rotating structure 160 (see FIG. 2). More particularly, the third engine accessory 110 and its third engine accessory rotor 132 may be functionally isolated from the engine core 48 and its rotating structures 148 and 160 (see FIGS. 1 and 2).

In some embodiments, referring to FIGS. 2, 3A and 3B, the position of the actuatable clutch member 178 may be selected based on a rotational speed of the engine rotating structures 148 and/or 160. For example, when the second engine rotating structure 160 (e.g., the low speed rotating structure 74) is rotating at or below a threshold speed, the power coupler 104 may operate in the second power transfer arrangement. However, when the second engine rotating structure 160 is rotating above the threshold speed, the power coupler 104 may operate in the first power transfer arrangement. With such operation, the power coupler 104 may operate in the first power transfer arrangement during higher power phases of aircraft flight such as aircraft takeoff, aircraft climb and aircraft cruise. By contrast, the power coupler 104 may operate in the second power transfer arrangement during lower power phases of aircraft flight such as aircraft descent, aircraft landing, aircraft taxiing and during startup of the aircraft powerplant 20 while on ground. The present invention, of course, is not limited to the foregoing exemplary power coupler schedule.

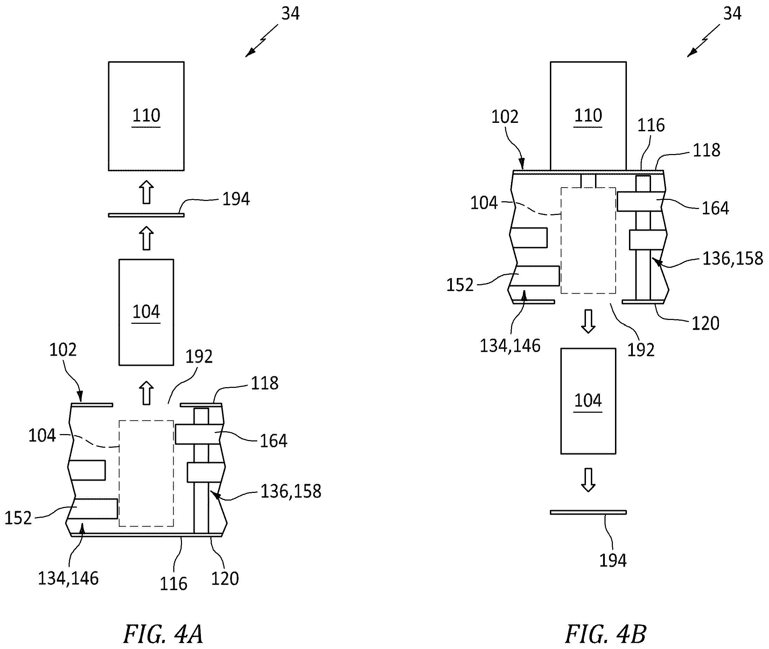

In some embodiments, referring to FIGS. 4A and 4B, the power coupler 104 may be configured as a self-contained module. With such an arrangement, the power coupler 104 may have an internal lubrication system which is independent from a lubrication system 190 (see FIG. 2) for the accessory gearbox 102 and its first gear system 146 and/or its second gear system 158. Possible contaminants generated by wear of the clutch members 178, 182 and 186 (see FIGS. 3A and 3B) may thereby be kept out of the lubricant for the first gear system 146 and/or its second gear system 158 (see FIG. 2), as well as other systems fluidly coupled to the accessory gearbox 102. In addition, by configuring the power coupler 104 as a self-contained module, the power coupler 104 may be removed from the accessory gearbox 102 as a single line replaceable unit (LRU) without requiring removal and/or disconnecting of aircraft powerplant components such as other engine accessories 106 and 108 (see FIG. 2) (and optionally the third engine accessory 110 as shown in FIG. 4B). In the specific arrangement of FIGS. 4A and 4B, the power coupler 104 is configured to be removed from the interior of the accessory gearbox 102 and its gearbox housing 116 through an opening 192 in a sidewall of the gearbox housing 116 after removal of a cover 194 for that opening 192.

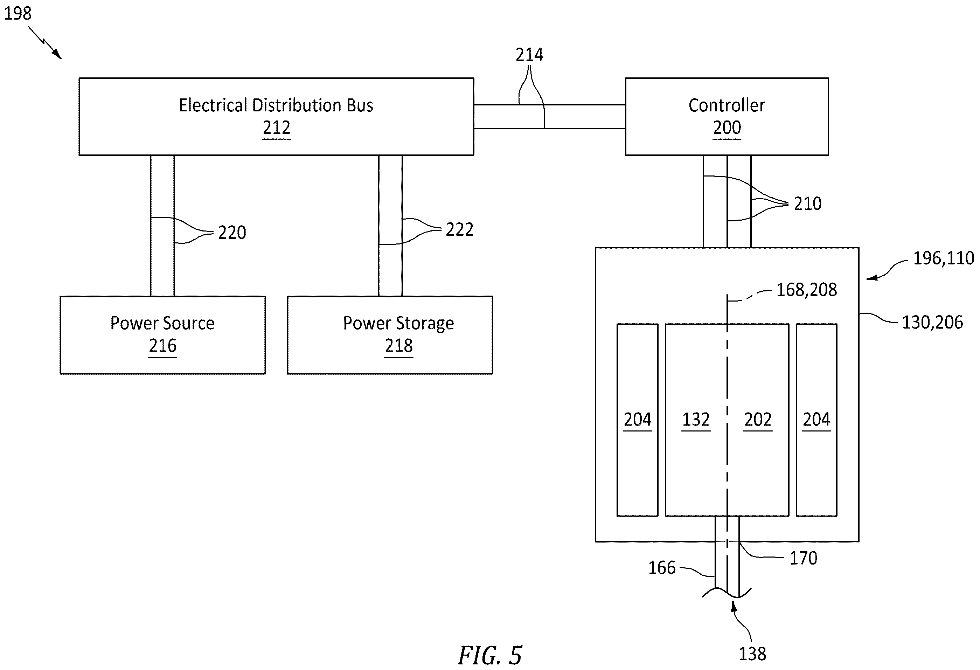

In some embodiments, referring to FIG. 5, the third engine accessory 110 may be configured as an electric machine 196 that is electrically coupled to an electrical system 198 through an electric machine (EM) controller 200. The electric machine 196 of FIG. 5 includes an electric machine rotor 202 (here, the third engine accessory rotor 132), an electric machine stator 204 and an electric machine housing 206 (here, the third engine accessory housing 130). The machine rotor 202 is rotatable about a rotational axis 208 of the machine rotor 202, which rotational axis 208 may also be an axial centerline of the electric machine 196 and coaxial with the shaft axis 168. The machine stator 204 of FIG. 5 is radially outboard of and circumscribes the machine rotor 202. With this arrangement, the electric machine 196 is configured as a radial flux electric machine. The electric machine 196 of the present invention, however, is not limited to such an exemplary rotor-stator configuration nor to radial flux arrangements. The machine rotor 202, for example, may alternatively be radially outboard of and circumscribe the machine stator 204. In another example, the machine rotor 202 may be axially next to the machine stator 204 configuring the electric machine 196 as an axial flux electric machine. Referring again to FIG. 5, the machine rotor 202 and the machine stator 204 are at least partially or completely housed within an interior of the machine housing 206.

The electric machine 196 of FIG. 5 may be configurable as an electric motor and/or an electric generator; e.g., an electric motor-generator. For example, during a motor mode of operation, the electric machine 196 may operate as the electric motor to convert electricity received from the aircraft electrical system 198. The machine stator 204, for example, may generate an electromagnetic field with the machine rotor 202 using a current of electricity received from the aircraft electrical system 198 through the EM controller 200. This electromagnetic field may drive rotation of the machine rotor 202. The machine rotor 202, in turn, may provide mechanical power to and drive rotation of the respective engine rotating structure 148, 160 (see FIG. 2) and/or other elements through the power coupler 104 (see FIG. 2). This mechanical power may be provided to boost power or completely power the rotation of the respective engine rotating structure 148, 160 (see FIG. 2) and/or other elements. By contrast, during a generator mode of operation, the electric machine 196 may operate as the electric generator to convert mechanical power received from the respective engine rotating structure 148, 160 (see FIG. 2) and/or other elements into electricity. Rotation of the machine rotor 202, for example, may be rotationally driven by rotation of the respective engine rotating structure 148, 160 (see FIG. 2) and/or other elements through the power coupler 104 (see FIG. 2). The rotation of the machine rotor 202 may generate an electromagnetic field with the machine stator 204, and the machine stator 204 may convert energy from the electromagnetic field into electricity. The electric machine 196 may then provide a current of electricity to the aircraft electrical system 198 through the EM controller 200 for storage and/or further use. The electric machine 196 of the present invention, however, is not limited to such exemplary operation. For example, the electric machine 196 may alternatively be configured as a dedicated electric generator; e.g., without the electric motor functionality. In another example, the electric machine 196 may be configured as a dedicated electric motor; e.g., without the electric generator functionality.

The EM controller 200 is electrically coupled to the electric machine 196 through one or more electric cables 210; e.g., high voltage electric cables, power feeder cables, etc. More particularly, controller circuitry in the EM controller 200 is electrically coupled to the electric machine 196 and its machine stator 204 through the electric cables 210. Similarly, the EM controller 200 is electrically coupled to an electrical distribution bus 212 of the aircraft electrical system 198 through one or more electric cables 214; e.g., high voltage electric cables, power feeder cables, etc. More particularly, the controller circuitry in the EM controller 200 is electrically coupled to the aircraft electrical system 198 and its electrical distribution bus 212 through the respective electric cables 214.

The EM controller 200 and its controller circuitry are configured to control operation of the electric machine 196. For example, when operating as the electric motor, the EM controller 200 is configured to regulate a flow of electricity from the aircraft electrical system 198 to the electric machine 196. This electricity flow regulation may include: (a) turning-on the flow of electricity from the aircraft electrical system 198 to the electric machine 196 (e.g., electrically coupling the electric machine 196 to the aircraft electrical system 198); (b) turning-off the flow of electricity from the aircraft electrical system 198 to the electric machine 196 (e.g., electrically decoupling the electric machine 196 from the aircraft electrical system 198); (c) moderating the flow of electricity from the aircraft electrical system 198 to the electric machine 196. Here, the EM controller 200 operates as a motor controller. In another example, when operating as the electric generator, the EM controller 200 is configured to regulate a flow of electricity from the electric machine 196 to the aircraft electrical system 198. This electricity flow regulation may include: (a) turning-on the flow of electricity from the electric machine 196 to the aircraft electrical system 198 (e.g., electrically coupling the electric machine 196 to the aircraft electrical system 198); (b) turning-off the flow of electricity from the electric machine 196 to the aircraft electrical system 198 (e.g., electrically decoupling the electric machine 196 from the aircraft electrical system 198); (c) moderating the flow of electricity from the electric machine 196 to the aircraft electrical system 198. Here, the EM controller 200 operates as a generator controller.

The aircraft electrical system 198 includes the electrical distribution bus 212. This aircraft electrical system 198 may also include a power source 216 and/or a power storage 218. The electrical distribution bus 212 is electrically coupled to the electric machine 196 through the EM controller 200. The electrical distribution bus 212 is also electrically coupled to the power source 216 and the power storage 218, respectively via electric cables 220 and 222; e.g., high voltage electric cables, power feeder cables, etc. With this arrangement, the electrical distribution bus 212 provides an intermediate connection between the various electrical aircraft propulsion system members 196 (via 200), 216 and 218. The power source 216 may be an electric generator powered by the turbine engine 24 (see FIG. 1) or an electric generator powered by another aircraft powerplant; e.g., an engine of a companion aircraft propulsion system, an engine of an auxiliary power unit (APU), a fuel cell system, etc. The power storage 218 is configured to receive electricity from the electrical distribution bus 212 for storage. The power storage 218 is also configured to provide the stored electricity to the electrical distribution bus 212. The power storage 218, for example, may be configured as or otherwise include one or more electricity storage devices; e.g., batteries, super capacitors, etc.

Referring to FIG. 2, it is also contemplated one of the first engine accessories 106 (e.g., 106A) may be configured as a dedicated electric machine (e.g., an electric motor-generator, an electric motor or an electric generator) associated with the first engine rotating structure 148. In addition or alternatively, it is contemplated the second engine accessory 108 may be configured as a dedicated electric machine (e.g., an electric motor-generator, an electric motor or an electric generator) associated with the second engine rotating structure 160.

In some embodiments, referring to FIG. 1, the accessory gearbox 102 may be arranged in the inner housing compartment 84. The accessory gearbox 102, for example, may be mounted to the inner case 80. The present invention, however, is not limited to such an exemplary accessory gearbox location or mounting arrangement. For example, it is contemplated the accessory gearbox 102 may alternatively arranged in the outer housing compartment 90 or another location.

While various embodiments of the present invention have been described, it will be apparent to those of ordinary skill in the art that many more embodiments and implementations are possible within the scope of the invention. For example, the present invention as described herein includes several aspects and embodiments that include particular features. Although these features may be described individually, it is within the scope of the present invention that some or all of these features may be combined with any one of the aspects and remain within the scope of the invention. Accordingly, the present invention is not to be restricted except in light of the attached claims and their equivalents.

## Claims

1. An assembly for an aircraft powerplant, comprising:
a gearbox housing;
a power transfer shaft arranged with the gearbox housing;
a first gear system disposed within an interior of the gearbox housing;
a second gear system disposed within the interior of the gearbox housing and operationally independent of the first gear system; and
a power coupler disposed within the interior of the gearbox housing, the power coupler arranged with the power transfer shaft and disposed between the first gear system and the second gear system, and the power coupler configurable in a first arrangement and a second arrangement, wherein:
in the first arrangement, the power coupler operatively couples the first gear system to the power transfer shaft and operatively decouples the second gear system from the power transfer shaft; and
in the second arrangement, the power coupler operatively couples the second gear system to the power transfer shaft and operatively decouples the first gear system from the power transfer shaft.

2. The assembly of claim 1, wherein the power coupler comprises a clutch.

3. The assembly of claim 1 or 2, wherein:
the first gear system comprises a first system gear;
the power coupler includes a first coupler gear and an actuatable clutch member;
the first coupler gear is meshed with the first system gear; and
the actuatable clutch member operatively couples the first coupler gear to the power transfer shaft when the power coupler is in the first arrangement, and the actuatable clutch member operatively decouples the first coupler gear from the power transfer shaft when the power coupler is in the second arrangement.

4. The assembly of claim 3, wherein the first coupler gear is meshed with the first system gear when the power coupler is in the first arrangement and the second arrangement.

5. The assembly of claim 3 or 4, wherein:
the actuatable clutch member circumscribes the power transfer shaft; and
the actuatable clutch member is configured to translate axially along the power transfer shaft between the first arrangement and the second arrangement.

6. The assembly of claim 3, 4 or 5, wherein:
the power coupler further includes a first gear clutch member connected to the first coupler gear; and
the actuatable clutch member axially engages the first gear clutch member when the power coupler is in the first arrangement, and the actuatable clutch member is disengaged and axially spaced from the first gear clutch member when the power coupler is in the second arrangement.

7. The assembly of claim 6, wherein:
the second gear system comprises a second system gear;
the power coupler further includes a second coupler gear and a second gear clutch member connected to the second coupler gear;
the second coupler gear is meshed with the second system gear; and
the actuatable clutch member axially engages the second gear clutch member when the power coupler is in the second arrangement, and the actuatable clutch member is disengaged and axially spaced from the second gear clutch member when the power coupler is in the first arrangement.

8. The assembly of claim 3, 4 or 5, wherein:
the second gear system comprises a second system gear;
the power coupler includes a second coupler gear meshed with the second system gear; and
the actuatable clutch member operatively couples the second coupler gear to the power transfer shaft when the power coupler is in the second arrangement, and the actuatable clutch member operatively decouples the second coupler gear from the power transfers shaft when the power coupler is in the first arrangement.

9. The assembly of claim 8, wherein the first system gear and the second system gear are axially offset along a shaft axis of the power transfer shaft.

10. The assembly of claim 8 or 9, wherein the actuatable clutch member is disposed axially between the first coupler gear and the second coupler gear along a shaft axis of the power transfer shaft.

11. The assembly of claim 8, 9 or 10, wherein the second coupler gear is meshed with the second system gear when the power coupler is in the first arrangement and the second arrangement.

12. The assembly of any preceding claim, wherein the power coupler is configured as a line replaceable unit that is removable from the gearbox housing without removal of at least one of the first gear system or the second gear system.

13. The assembly of any preceding claim, further comprising an engine accessory mounted to the gearbox housing, the engine accessory comprising an engine accessory rotor operatively coupled to the power coupler through the power transfer shaft, optionally wherein:
the engine accessory comprises an electric machine.

14. The assembly of any preceding claim, further comprising:
a first engine accessory mounted to the gearbox housing, the first engine accessory comprising a first engine accessory rotor operatively coupled to the power coupler through the first gear system; and/or
a second engine accessory mounted to the gearbox housing, the second engine accessory comprising a second engine accessory rotor operatively coupled to the power coupler through the second gear system.

15. The assembly of any preceding claim, further comprising a turbine engine comprising a first rotating structure and a second rotating structure rotationally independent of the first rotating structure, wherein:
the first rotating structure comprises a first bladed rotor, the first rotating structure operatively coupled to the power coupler through the first gear system; and
the second rotating structure comprises a second bladed rotor, the second rotating structure operatively coupled to the power coupler through the second gear system.
